# EUROPÄISCHE PATENTSCHRIFT

(11) **EP 3 365 189 B1**
(45) Veröffentlichungstag und Bekanntmachung des Hinweises auf die Patenterteilung: **11.09.2019**
(21) Anmeldenummer: 16733984.5
(22) Anmeldetag: 04.07.2016
(51) Int. Cl.: B60C 19/08, B60C 15/06

(54) **FAHRZEUGLUFTREIFEN**
PNEUMATIC VEHICLE TIRE
PNEUMATIQUE DE VÉHICULE

(30) Priorität: 21.10.2015 DE 102015220492
(43) Veröffentlichungstag der Anmeldung: 29.08.2018
(73) Patentinhaber: Continental Reifen Deutschland GmbH, 30165 Hannover (DE)
(72) Erfinder: WEBER, Christian, 30826 Garbsen (DE); KENDZIORRA, Norbert, 30827 Garbsen (DE)
(74) Vertreter: Finger, Karsten
(86) Internationale Anmeldenummer: PCT/EP2016/065635
(87) Internationale Veröffentlichungsnummer: WO 2017/067679

(56) Entgegenhaltungen:
- EP-A1- 1 659 005
- EP-A2- 1 526 005
- EP-A2- 2 799 247
- DE-A1-102010 017 443
- DE-A1-102013 113 935

## Beschreibung

Die Erfindung betrifft einen Fahrzeugluftreifen in Radialbauart mit einer Karkasse, mit Seitenwänden, mit Karkasskernen und mit Wulststreifen, wobei die Karkasse von axial innen nach axial außen um die Karkasskerne geführt ist und einen Karkasshochschlag aufweist, wobei die Karkasse samt Karkasshochschlag sowie die Seitenwände rollwiderstandoptimierte Kautschukmischungen aufweisen, welche unzureichend elektrisch leitfähig ist, während die Wulststreifen zumindest teilweise aus einer Kautschukmischung bestehen, die elektrisch leitfähig ist und wobei wenigstens die radial äußere Oberfläche der Karkasse elektrisch leitfähige Elemente aufweist, welche im Bereich des Karkasshochschlages radial innen liegen, wobei diese elektrisch leitfähigen Elemente fadenförmig oder streifenförmig ausgebildet und voneinander beabstandet angeordnet sind und einen radialen Verlauf aufweisen.

Ein derartiger Fahrzeugluftreifen ist aus der DE 10 2010 017 443 A1 bekannt geworden. Dieser Reifen weist einen reduzierten Rollwiderstand durch den Einsatz rollwiderstandsarmer Mischungen auf. Diese werden bevorzugt im Seitenwandbereich, für die Innenschicht und die Karkasse eingesetzt. Die Hysterese dieser rollwiderstandsarmen Mischungen lässt sich unter anderem durch den Austausch von Ruß durch Silika verringern. Der Einsatz dieser rollwiderstandsarmen Mischungen führt jedoch zu einer Erhöhung des elektrischen Widerstandes dieser Mischungen, so dass die elektrische Leitfähigkeit sinkt. Der von vielen Automobilherstellern geforderte elektrische Widerstand des Gesamtreifens von höchstens 1 x 10⁸Ω zur Ableitung der elektrostatischen Aufladung kann nicht sichergestellt werden.

Weiterhin sind aus der EP 2 799 247 A2, aus der DE 10 2013 113935 A1, aus der EP 1 526 005 A2 und der DE EP 1 659 005 A1 Fahrzeugluftreifen mit elektrischen Leitwegen zur elektrischen Ladungsableitung bekannt.

Um die im Betrieb des Reifens auftretende elektrostatische Aufladung ableiten zu können, sind Teile des mit der Fahrbahnoberfläche in Kontakt tretenden Kopfbereiches und der mit der Reifenfelge in Kontakt tretende Wulststreifen aus elektrisch leitfähigen Kautschukmischungen gefertigt. Die elektrische Verbindung zwischen dem Kopfbereich und dem Wulststreifen wird durch elektrisch leitfähig gestaltete Elemente, hier Luftabführungsfäden, hergestellt, welche auf der Oberfläche der Karkasse angeordnet sind. Im Reifen verlaufen die elektrisch leitfähig gestalteten Luftabführungsfäden in radialer Richtung und überspannen die volle Karkasslagenbreite, verlaufen also auch im Bereich des Karkasshochschlages. Die elektrisch leitfähig gestalteten Luftabführungsfäden sind nicht dicht an dicht, sondern beabstandet zueinander angeordnet.

Das Problem ist nun, den elektrischen Leitweg von der radial äußeren Oberfläche der Karkasse zum elektrisch leitfähigen Wulststreifen sicherzustellen. Durch die voneinander beabstandete Belegung der Oberfläche der Karkasse ist selbst bei beidseitiger Belegung der Karkassenoberfläche mit den elektrisch leitfähig gestalteten Luftabführungsfäden nicht sichergestellt, dass die Ladung von der radial äußeren Oberfläche der Karkasse zur radial äußeren Oberfläche des Karkasshochschlages abgeleitet werden kann. Denn die Karkasse weist eine gewisse Dicke auf und die Stirnfläche des Karkasshochschlages weist keine elektrisch leitenden Elemente auf.

"Elektrisch leitfähig" bedeutet, dass der Reifen einen elektrischen Widerstand von höchstens 1 x 10⁸Ω aufweist.

"Unzureichend elektrisch leitfähige Kautschukmischungen" sind Mischungen, mit denen der Reifen einen elektrischen Widerstand von > 1 x 10⁸Ω aufweist.

Der Begriff "Kopfbereich" meint die Bauteile Laufstreifen, Gürtel, Gürtelbandage und mögliche Zwischenschichten zwischen den vorgenannten Bauteilen.

Der Erfindung liegt die Aufgabe zugrunde, einen rollwiderstandsoptimierten Fahrzeugluftreifen bereitzustellen, bei dem die elektrische Ladungsableitung mittels einfacher Maßnahmen zuverlässig sichergestellt ist.

Gelöst wird die Aufgabe gemäß dem Oberbegriff und den kennzeichnenden Merkmalen von Anspruch 1 dadurch, dass ein zusätzliches, elektrisch leitfähiges Bauteil im Bereich des Endes des Karkasshochschlages angeordnet ist, welches unmittelbar auf der Karkasse aufliegt und welches einen elektrischen Leitweg entweder von der axial äußeren Oberfläche der Karkasse oder von der axial inneren Oberfläche des Karkasshochschlages zur axial äußeren Oberfläche des Karkasshochschlages oder zum Wulststreifen herstellt.

Erfindungswesentlich ist, dass durch die einfache Maßnahme eines zusätzlichen elektrisch leitfähigen Bauteils die Ladungsableitung von der äußeren Oberfläche der Karkasse bzw. von der radial inneren Oberfläche des Karkasshochschlages zur radial äußeren Oberfläche des Karkasshochschlages sichergestellt ist.

"Zusätzliches, elektrisch leitfähiges Bauteil" meint dabei beispielsweise ein Bauteil aus Kautschuk oder ein Film, der nach Verdunsten des Lösungsmittels nach Aufbringen einer elektrisch leitfähigen Lösung verbleibt.

Es ist vorteilhaft, wenn das zusätzliche elektrisch leitfähige Bauteil ein über den Umfang des Reifens umlaufender Kautschukstreifen ist, welcher aus einer elektrisch leitfähigen Kautschukmischung, vorzugsweise aus einer rußhaltigen Kautschukmischung besteht.

Vorteilhaft ist es, wenn das zusätzliche elektrisch leitfähige Bauteil eine Dicke zwischen 0,2mm und 1,5mm aufweist.

In einer bestimmten Ausführung der Erfindung weist ausschließlich die axial äußere Oberfläche der Karkasse elektrisch leitfähige Elemente auf, welche im Karkasshochschlag axial innen liegen und das zusätzliche elektrisch leitfähige Bauteil ist entweder von der axial äußeren Oberfläche der Karkasse an der axial äußeren Seite des Karkasshochschlages bis zum Wulststreifen geführt oder ist von der axial inneren Oberfläche des Karkasshochschlages bis zum Wulststreifen als vorzugsweise asymmetrischer Wrap geführt.

"Asymmetrischer Wrap" meint einen Wrap aus zwei unterschiedlich langen Schenkeln, welche sich von einem gemeinsamen Scheitelpunkt aus erstrecken.

In einer anderen Ausführung der Erfindung weist sowohl die axial äußere Oberfläche der Karkasse als auch die axial innere Oberfläche der Karkasse elektrisch leitfähige Elemente auf und das zusätzliche elektrisch leitfähige Bauteil ist entweder von der axial äußeren Oberfläche der Karkasse auf die axial äußere Seite des Karkasshochschlages geführt oder ist von der axial inneren Oberfläche des Karkasshochschlages auf die axial äußere Seite des Karkasshochschlages als vorzugsweise symmetrischer Wrap geführt.

"Symmetrischer Wrap" meint einen Wrap aus zwei gleich langen Schenkeln, welche sich von einem gemeinsamen Scheitelpunkt aus erstrecken.

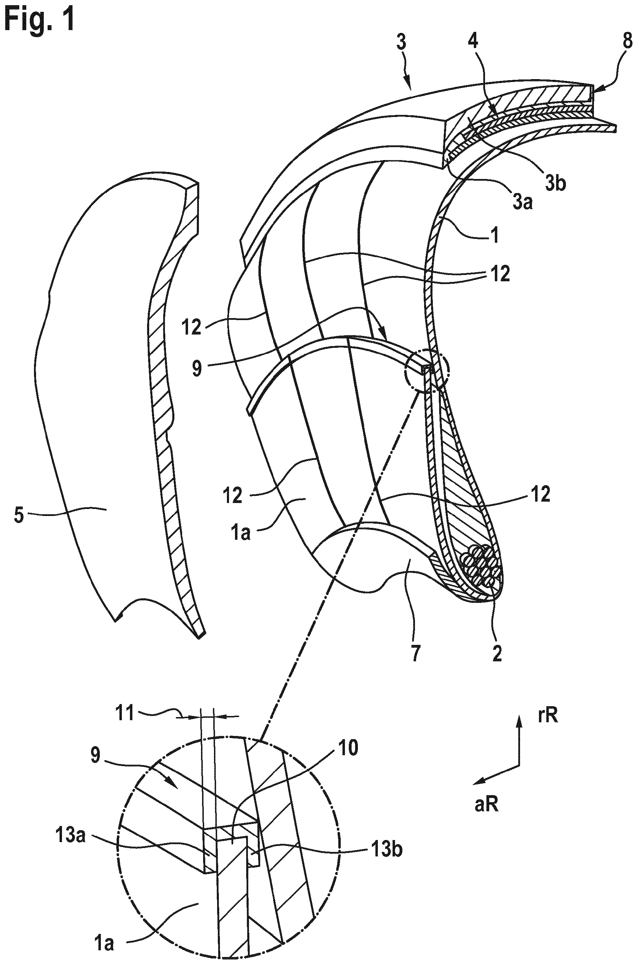

Die Erfindung wird nun anhand von einem schematischen Ausführungsbeispiel näher erläutert. Dabei zeigt die Figur 1 einen dreidimensionalen hälftigen Querschnitt durch einen erfindungsgemäßen Fahrzeugluftreifen.

Der Fahrzeugluftreifen in Radialbauart weist eine Karkasse 1 auf, wobei die Karkasse 1 von axial innen nach axial außen um Wulstkerne 2 geführt ist und in einem Karkasshochschlag 1a endet. Der Fahrzeugluftreifen weist weiterhin einen Laufstreifen 3 aus einer radial inneren Base 3a, einer radial äußeren Cap 3b und aus einem elektrisch leitfähigem sogenannten Carbon Center Beam 8, einen mehrlagigen Gürtel 4, Seitenwände 5 (hier als ein vom Reifen abgehobenes Bauteil dargestellt), eine Innenschicht (nicht dargestellt) und Wulststreifen 7 auf. Die Karkasse 1, 1a, die Laufstreifencap 3b, die Innenschicht sowie die Seitenwände 5 bestehen aus rollwiderstandoptimierten Kautschukmischungen, welche unzureichend elektrisch leitfähig sind. Der Wulststreifen 7, der Gürtel 4 sowie der in den Laufstreifen 3 integrierte Carbon Center Beam 8 und die Laufstreifenbase 3a bestehen aus Kautschukmischungen, die elektrisch leitfähig sind. Um die im Betrieb des Fahrzeuges auftretende elektrostatische Aufladung ableiten zu können, muss ein elektrischer Leitweg von dem mit der Fahrbahn in Kontakt tretenden Kopfbereich bis zu dem mit der Reifenfelge in Kontakt tretenden Wulststreifen 7 vorhanden sein. Weil die Karkasse 1, 1a und die Seitenwand 5 nur unzureichend elektrisch leitfähig sind, wird die Leitfähigkeit durch elektrisch leitfähig gestaltete Fäden, vorzugsweise Luftabführungsfäden 12 hergestellt, welche auf der Oberfläche der Karkasse 1, 1a angeordnet sind. In dieser Ausführung der Erfindung sind beide Oberflächen der Karkasse 1, 1a (sowohl die radial äußere als auch die radial innere Oberfläche) mit elektrisch leitfähig gestalteten Fäden 12 belegt. In einer alternativen Ausführung der Erfindung kann nur die radial äußere Oberfläche der Karkasse 1, 1a die elektrisch leitfähig gestalteten Fäden aufweisen. Hier dargestellt weisen beide Karkassoberflächen die elektrisch leitfähig gestalteten Fäden 12 auf.

Um einen elektrischen Leitweg von der Karkasse 1, 1a zu dem Wulststreifen 7 sicherzustellen, ist ein zusätzliches, elektrisch leitfähiges Bauteil 9 im Bereich des Endes 10 des Karkasshochschlages la angeordnet. Dieses zusätzliche elektrisch leitfähige Bauteil 9 liegt unmittelbar auf der Karkasse 1, 1a auf und stellt einen elektrischen Leitweg von der radial inneren Oberfläche des Karkasshochschlages 1a zur radial äußeren Oberfläche des Karkasshochschlages 1a her. Das zusätzliche elektrisch leitfähige Bauteil 9 schlägt das Ende 10 des Karkasshochschlages 1a als symmetrischer Wrap mit zwei gleichlangen Schenkeln 13a, 13b ein und überbrückt die nicht leitfähige Stirnfläche des Endes 10 des Karkasshochschlages la. Auf der äußeren Oberfläche des Karkasshochschlages la sind die elektrisch leitend gestaltete Fäden 12 angeordnet, welche die elektrische Verbindung bis zum Wulststreifen 7 herstellen. Der Wulststreifen 7 kommt beim betriebsbereiten, auf eine Felge aufgezogenen Reifen mit der Felge in Kontakt.

Das zusätzliche elektrisch leitfähige Bauteil 9 ist ein über den Umfang des Reifens umlaufender Kautschukstreifen, welcher aus einer elektrisch leitfähigen Kautschukmischung, vorzugsweise aus einer rußhaltigen Kautschukmischung besteht. Das Bauteil 9 weist eine Dicke 11 zwischen 0,2mm und 1,5mm auf.

### Bezugszeichenliste

### (ist Teil der Beschreibung)

- 1: Karkasse
- 1a: Karkasshochschlag
- 2: Wulstkern
- 3: Laufstreifen
- 3a: Laufstreifenbase
- 3b: Laufstreifencap
- 4: Gürtel
- 5: Seitenwand
- 7: Wulststreifen
- 8: Carbon Center Beam
- 9: zusätzliches elektrisch leitfähiges Bauteil
- 10: Ende des Karkasshochschlages
- 11: Dicke des zusätzlichen elektrisch leitfähigen Bauteiles
- 12: elektrisch leitfähiger (Luftabführungs-)Faden
- 13a: Schenkel
- 13b: Schenkel

- aR: axiale Richtung
- rR: radiale Richtung

## Patentansprüche

1. Fahrzeugluftreifen in Radialbauart mit einer Karkasse (1, 1a), wobei die Karkasse (1) von axial innen nach axial außen um die Wulstkerne (2) geführt ist und einen Karkasshochschlag (1a) aufweist, wobei die Karkasse (1, 1a) sowie die Seitenwand (5) aus Kautschukmischungen bestehen, welche unzureichend elektrisch leitfähig sind, während der Wulststreifen (7) zumindest teilweise aus einer Kautschukmischung besteht, die elektrisch leitfähig ist und wobei wenigstens die axial äußere Oberfläche der Karkasse (1) elektrisch leitfähige Elemente (12) aufweist, welche im Karkasshochschlag (1a) axial innen liegen, wobei diese elektrisch leitfähigen Elemente (12) fadenförmig oder streifenförmig ausgebildet und voneinander beabstandet angeordnet sind und einen radialen Verlauf aufweisen, **dadurch gekennzeichnet, dass**
ein zusätzliches, elektrisch leitfähiges Bauteil (9) im Bereich des Endes des Karkasshochschlages (10) angeordnet ist, welches unmittelbar auf der Karkasse (1, 1a) aufliegt und welches einen elektrischen Leitweg entweder von der axial äußeren Oberfläche der Karkasse (1) oder der axial inneren Oberfläche des Karkasshochschlages (1a) zur axial äußeren Oberfläche des Karkasshochschlages (1a) oder zum Wulststreifen (7) herstellt.

2. Fahrzeugluftreifen nach Anspruch 1,
**dadurch gekennzeichnet, dass** das zusätzliche elektrisch leitfähige Bauteil (9) ein über den Umfang des Reifens umlaufender Kautschukstreifen ist, welcher aus einer elektrisch leitfähigen Kautschukmischung, vorzugsweise aus einer rußhaltigen Kautschukmischung besteht.

3. Fahrzeugluftreifen nach Anspruch 1 oder 2,
**dadurch gekennzeichnet, dass** das zusätzliche elektrisch leitfähige Bauteil (9) eine Dicke (11) zwischen 0,2mm und 1,5mm aufweist.

4. Fahrzeugluftreifen nach einem oder mehreren der vorangehenden Ansprüche,
**dadurch gekennzeichnet, dass** ausschließlich die axial äußere Oberfläche der Karkasse (1) elektrisch leitfähige Elemente (12) aufweist, welche im Karkasshochschlag (1a) axial innen liegen und dass das zusätzliche elektrisch leitfähige Bauteil (9) entweder von der axial äußeren Oberfläche der Karkasse (1) an der axial äußeren Seite des Karkasshochschlages (1a) bis zum Wulststreifen (7) geführt ist oder von der axial inneren Oberfläche des Karkasshochschlages (1a) bis zum Wulststreifen (7) als vorzugsweise asymmetrischer Wrap geführt ist.

5. Fahrzeugluftreifen nach einem oder mehreren der vorhergehenden Ansprüche,
**dadurch gekennzeichnet, dass** sowohl die axial äußere Oberfläche der Karkasse (1) als auch die axial innere Oberfläche der Karkasse elektrisch leitfähige Elemente (12) aufweist und dass das zusätzliche elektrisch leitfähige Bauteil (9) entweder von der axial äußeren Oberfläche der Karkasse (1) auf die axial äußere Seite des Karkasshochschlages (1a) geführt ist oder von der axial inneren Oberfläche des Karkasshochschlages (1a) auf die axial äußere Seite des Karkasshochschlages (1a) als vorzugsweise symmetrischer Wrap geführt ist.

## Claims

1. Pneumatic vehicle tire of a radial type of construction with a carcass (1, 1a), wherein the carcass (1) is led around the bead cores (2) from axially inside to axially outside and has a carcass turn-up (1a), wherein the carcass (1, 1a) and also the sidewall (5) consist of rubber compounds that are insufficiently electrically conductive, while the bead strip (7) consists at least partially of a rubber compound that is electrically conductive, and wherein at least the axially outer surface of the carcass (1) has electrically conductive elements (12), which in the carcass turn-up (1a) lie axially on the inside, wherein these electrically conductive elements (12) are formed as filaments or strips and are arranged spaced apart from one another and follow a radial path, **characterized in that** in the region of the end of the carcass turn-up (10) there is arranged an additional, electrically conductive component (9), which lies directly on the carcass (1, 1a) and establishes a path of electrical conduction either from the axially outer surface of the carcass (1) or from the axially inner surface of the carcass turn-up (1a) to the axially outer surface of the carcass turn-up (1a) or to the bead strip (7).

2. Pneumatic vehicle tire according to Claim 1, **characterized in that** the additional electrically conductive component (9) is a rubber strip that runs around the circumference of the tire and consists of an electrically conductive rubber compound, preferably of a rubber compound containing carbon black.

3. Pneumatic vehicle tire according to Claim 1 or 2, **characterized in that** the additionally electrically conductive component (9) has a thickness (11) of between 0.2 mm and 1.5 mm.

4. Pneumatic vehicle tire according to one or more of the preceding claims,
**characterized in that** only the axially outer surface of the carcass (1) has electrically conductive elements (12), which in the carcass turn-up (1a) lie axially on the inside, and **in that** the additional electrically conductive component (9) is either led from the axially outer surface of the carcass (1) on the axially outer side of the carcass turn-up (1a) to the bead strip (7) or is led from the axially inner surface of the carcass turn-up (1a) to the bead strip (7) as a preferably asymmetrical wrap.

5. Pneumatic vehicle tire according to one or more of the preceding claims,
**characterized in that** both the axially outer surface of the carcass (1) and the axially inner surface of the carcass have electrically conductive elements (12) and **in that** the additional electrically conductive component (9) is either led from the axially outer surface of the carcass (1) to the axially outer side of the carcass turn-up (1a) or is led from the axially inner surface of the carcass turn-up (1a) to the axially outer side of the carcass turn-up (1a) as a preferably symmetrical wrap.

## Revendications

1. Pneumatique de véhicule du type radial comprenant une carcasse (1, 1a), la carcasse (1) étant guidée axialement de l'intérieur vers l'extérieur autour des tringles de talon (2) et comportant une remontée de carcasse (1a), la carcasse (1, 1a) et la paroi latérale (5) étant formées de mélanges de caoutchouc qui ne sont pas assez électriquement conducteur, tandis que la bande de talon (7) est formée au moins partiellement d'un mélange de caoutchouc qui est électriquement conducteur et au moins la surface axialement extérieure de la carcasse (1) comportant des éléments électriquement conducteurs (12) qui se trouvent axialement à l'intérieur dans la remontée de carcasse (1a), ces éléments électriquement conducteurs (12) étant conçus en forme de fils ou de bandes et étant disposés de manière espacée les uns des autres et ayant un développement radial,
**caractérisé en ce que**
un élément électriquement conducteur supplémentaire (9) est disposé dans la région de l'extrémité de la remontée de carcasse (10), laquelle extrémité vient en appui directement sur la carcasse (1, 1a) et constitue une voie de conduction électrique allant soit depuis la surface axialement extérieure de la carcasse (1) soit depuis la surface axialement intérieure de la remontée de carcasse (1a) à la surface axialement extérieure de la remontée de carcasse (1a) ou à la bande de talon (7).

2. Pneumatique de véhicule selon la revendication 1, **caractérisé en ce que** l'élément électriquement conducteur supplémentaire (9) est une bande de caoutchouc qui s'étend sur la circonférence du pneumatique et qui est formée d'un mélange de caoutchoucs électriquement conducteur, de préférence d'un mélange de caoutchoucs contenant du noir de carbone.

3. Pneumatique de véhicule selon la revendication 1 ou 2,
**caractérisé en ce que** l'élément électriquement conducteur supplémentaire (9) a une épaisseur (11) comprise entre 0,2 mm et 1,5 mm.

4. Pneumatique de véhicule selon au moins une des revendications précédentes, **caractérisé en ce que** seule la surface axialement extérieure de la carcasse (1) comporte des éléments électriquement conducteurs (12) qui sont situés axialement à l'intérieur dans la remontée de carcasse (1a) et **en ce que** l'élément électriquement conducteur supplémentaire (9) est guidé soit depuis la surface axialement extérieure de la carcasse (1) du côté axialement extérieur de la remontée de carcasse (1a) à la bande de talon (7) soit depuis la surface axialement intérieure de la remontée de carcasse (1a) à la bande de talon (7) sous la forme d'une enveloppe de préférence asymétrique.

5. Pneumatique de véhicule selon au moins une des revendications précédentes,
**caractérisé en ce que** la surface axialement extérieure de la carcasse (1) et la surface axialement intérieure de la carcasse comportent des éléments électriquement conducteurs (12) et **en ce que** l'élément électriquement conducteur supplémentaire (9) est guidé soit depuis la surface axialement extérieure de la carcasse (1) au côté axialement extérieur de la remontée de carcasse (1a) soit depuis la surface axialement intérieure de la remontée de carcasse (1a) au côté axialement extérieur de la remontée de carcasse (1a) sous la forme d'une enveloppe de préférence symétrique.
